# FASCICULE DE BREVET EUROPEEN

(11) **EP 2 655 144 B1**
(45) Date de publication et mention de la délivrance du brevet: **22.02.2017**
(21) Numéro de dépôt: 11788864.4
(22) Date de dépôt: 01.12.2011
(51) Int. Cl.: B60T 11/16, B60T 11/20

(54) **PISTON PRIMAIRE DE MAÎTRE-CYLINDRE TANDEM ET MAÎTRE-CYLINDRE TANDEM EQUIPE D'UN TEL PISTON PRIMAIRE**
PRIMÄRKOLBEN FÜR EINEN TANDEM-MASTERZYLINDER UND TANDEM-MASTERZYLINDER MIT EINEM DERARTIGEN PRIMÄRKOLBEN
PRIMARY PISTON FOR A TANDEM MASTER CYLINDER, AND TANDEM MASTER CYLINDER PROVIDED WITH SUCH A PRIMARY PISTON

(30) Priorité: 21.12.2010 FR 1005013
(43) Date de publication de la demande: 30.10.2013
(73) Titulaire: Robert Bosch GmbH, 70442 Stuttgart (DE)
(72) Inventeur: RODRIGUEZ, Marc, F-95280 Jouy le Moutier (FR); BERNADAT, Olivier, F-94170 Le Perreux (FR); LHUILLIER, Laurent, F-93150 Le Blanc Mesnil (FR); NOBLET, Marc, F-75012 Paris (FR); GATEAU, Julien, F-92160 Antony (FR); GRECH, Daniel, F-60260 Lamorlaye (FR); CHARPENTIER, Carole, F-95160 Montmorency (FR)
(86) Numéro de dépôt international: PCT/EP2011/071508
(87) Numéro de publication internationale: WO 2012/084450

(56) Documents cités:
- EP-A1- 1 995 138
- EP-A1- 2 187 064
- EP-A1- 2 193 964
- WO-A1-2005/066005
- DE-A1- 10 062 988
- DE-A1- 19 536 610
- FR-A1- 2 912 713
- US-A1- 2003 010 027
- US-A1- 2005 268 608

## Description

### Domaine de l'invention

La présente invention se rapporte à un piston primaire de maître-cylindre tandem, composé d'une jupe munie d'un fond en position intermédiaire entre les extrémités de la jupe, une face du fond servant d'appui au poussoir du servofrein et l'autre recevant la tige télescopique et le ressort de compression agissant sur piston secondaire,
- la jupe ayant une extrémité avant munie de passages coopérant avec la chambre d'alimentation pour la relier à la chambre de pression délimitée dans le corps du maître-cylindre par la partie avant du piston primaire, et
- coopérant avec le joint de réalimentation logé dans une gorge du corps du maître-cylindre pour permettre le passage du liquide hydraulique en mode ESP.

L'invention concerne également un maître-cylindre tandem équipé d'un tel piston primaire.

### Etat de la technique

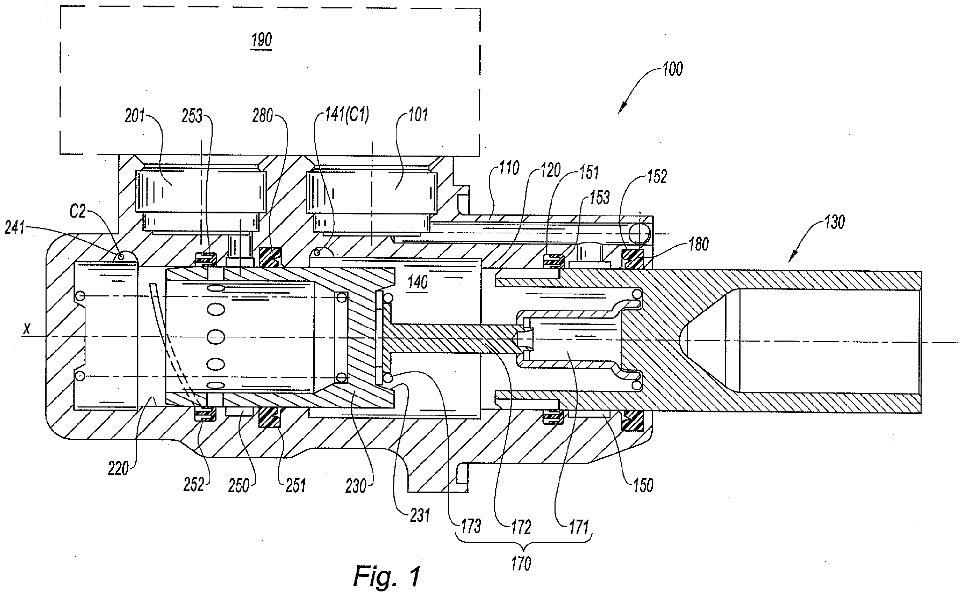

Les figures 1, 2, 2A et 4, 4A, 5, 6 montrent des modes de réalisation connus d'un maître-cylindre tandem. Ces vues sont limitées à des coupes au niveau du piston primaire.

Le maître-cylindre connu 300 se compose d'un corps 310 traversé par un alésage 320 d'axe xx logeant un piston primaire 330 commandé par le servofrein non représenté ou directement par l'action exercée sur la pédale de frein. Le piston primaire 330 délimite la chambre de pression 340 reliée au circuit de freins primaire. La chambre de pression 340 est séparée de la chambre d'alimentation 350 constituée par une gorge périphérique dans le corps 310. Du côté avant, la chambre d'alimentation 350 est bordée par une gorge périphérique 351 logeant un joint de réalimentation 353 et à l'arrière, du côté extérieur, la chambre d'alimentation 350 est bordée par une gorge arrière 352 logeant un joint d'étanchéité 380 ou joint d'isolation. Le piston primaire 330 est formé d'une jupe 332 comportant un fond intermédiaire 331 séparant la partie avant creuse de la partie arrière également creuse. Le fond 331 reçoit sur sa face arrière 333b le poussoir du servofrein et sur sa face avant 331a le fond 333 s'appuie contre la tige télescopique 370 formée de deux parties 371, 372 et du ressort 373 coopérant avec le piston secondaire non représenté dans ces figures.

Du côté avant, c'est-à-dire du côté de la chambre de pression 340 délimitée par le piston primaire 330 dans l'alésage 320 du maître-cylindre, la jupe 332 est traversée par une couronne de trous 333 assurant la communication entre la chambre d'alimentation 350 et la partie avant, intérieure du piston primaire délimitant la chambre de pression 340. Cette couronne de trous 333 est réalisée dans une gorge tronconique 334 de l'avant de la jupe 332 pour faciliter le passage du liquide hydraulique lorsque le piston primaire 330 se trouve en position de repos et que le système de freinage fonctionne en mode ESP. La couronne de trous 333 se trouve alors juste sous le joint de réalimentation 353 et permet le passage du liquide hydraulique de la chambre d'alimentation 350 vers la chambre de pression 340.

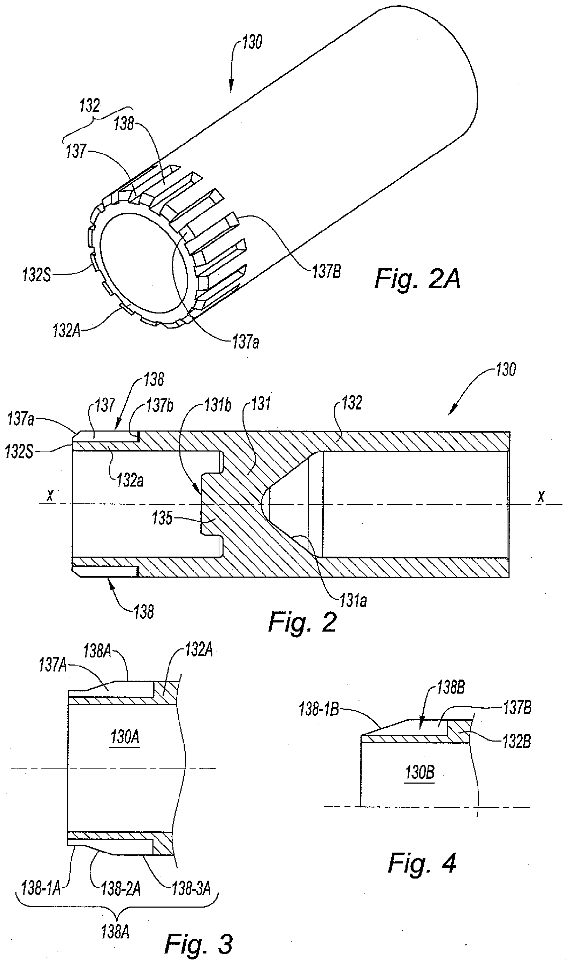

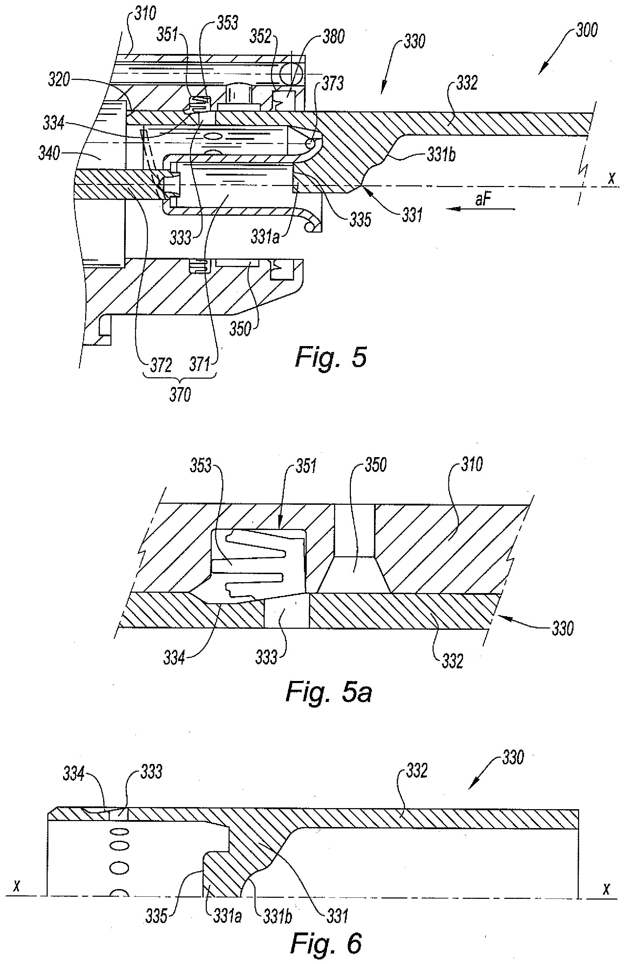

La figure 5 est une demi-coupe axiale d'un piston primaire 330 connu monté dans un maître-cylindre tandem 330 seulement représenté en partie. Cette demi-coupe partielle met en évidence la forme particulière du fond 331 avec sa cavité dans la face arrière 331a recevant le poussoir du servofrein et la face avant 331b munie d'un bossage 335 servant à centrer le ressort 373. La figure 3A met également en évidence la gorge tronconique 334a dont la conicité est tournée vers l'avant du piston primaire 330 de façon à soulager les efforts exercés sur le joint 353 comme cela est représenté dans la vue en coupe partielle de la figure 3A.

Le piston primaire 330 est en aluminium ou un alliage d'aluminium et nécessite un usinage important. De plus, des précautions particulières sont à prendre pour les trous 333 de façon à éliminer les barbes d'usinage. Cela se traduit globalement par un piston primaire d'usinage relativement complexe et coûteux et par suite, d'un maître-cylindre tandem, coûteux.

Un tel piston est également connu selon le document WO 2011/006305 comme piston secondaire dont l'avant est muni de perçages 13 remplacés dans un cas par une fente 33, éventuellement deux fentes 33 diamétralement opposées, voire plusieurs fentes. Il s'agit d'un piston secondaire qui n'est pas soumis aux mêmes exigences de précision que le piston primaire qui, lui, est de plus intermédiaire entre le poussoir du servofrein et le piston secondaire.
La fente 33 en forme de dégagement oblong à extrémité circulaire en remplacement de certains perçages est inadaptée pour une commande précise et efficace. De plus, une telle fente ou quelques fentes sollicitent de manière excessive les joints du maître-cylindre tandem.

### But de l'invention

La présente invention a pour but de développer un piston primaire de maître-cylindre tandem ainsi qu'un maître-cylindre tandem simple à réaliser et de fabrication économique.

### Exposé et avantages de l'invention

A cet effet, l'invention a pour objet un piston primaire du type défini ci-dessus, caractérisé en ce qu'il se compose d'une jupe et d'un fond en position intermédiaire, réalisés en matière plastique et l'extrémité avant de la jupe comporte une couronne de nervures délimitant des rainures fermées à l'arrière et débouchant vers l'avant pour assurer le passage entre la chambre d'alimentation et la chambre de pression lorsque le piston primaire est en position d'alimentation et pour permettre le passage de liquide hydraulique sous le joint de réalimentation lorsque le piston est en position de repos et que le système de freinage fonctionne en mode ESP et des nervures (138A) qui se terminant à l'avant par une extrémité avant (138-1A) cylindrique se poursuivant par une transition conique (138-2A) pour rejoindre une partie cylindrique (138-3A).

Le piston primaire selon l'invention, se réalise facilement par moulage par injection en matière plastique et la pièce sortant du moule est prête au montage sans nécessiter de travail de finition. Le piston primaire ainsi réalisé répond à toutes les conditions auxquelles doit répondre un piston primaire et en particulier, sa surface frontale est suffisamment grande pour pousser en cas d'incident, directement le piston secondaire.

De façon générale, l'invention permet de réaliser un piston primaire en matière plastique, suffisamment résistant pour les contraintes mécaniques auxquelles il peut être exposé. Sa forme simple permet notamment une fabrication en matière plastique injectée. Ces caractéristiques fonctionnelles sont également avantageuses car le piston permet de casser le flux hydraulique en ayant un effet d'amortissement contre les phénomènes de coup de bélier.

Enfin, le piston selon l'invention permet une réduction significative du coût de fabrication.

L'invention concerne également un maître-cylindre tandem du type défini ci-dessus, comportant un piston primaire en matière plastique dont l'avant est muni de rainures formant des passages pour le liquide hydraulique entre la chambre d'alimentation et la chambre de pression ou facilitant le passage du liquide hydraulique sous le joint de réalimentation lorsque le piston primaire est en position de repos et que le mode ESP active le système de freinage.

### Dessins

La présente invention et des variantes connues sera décrite ci-après de manière plus détaillée à l'aide des dessins annexés dans lesquels :
- la figure 1 est une coupe axiale schématique d'un maître-cylindre tandem équipé d'un piston primaire connu de l'état de la technique,
- la figure 2 est une demi-coupe axiale du piston primaire connu de l'état de la technique,
- la figure 2A est une vue isométrique du piston primaire connu de l'état de la technique,
- la figure 3 est une vue en coupe axiale d'une variante de l'avant du piston primaire selon l'invention,
- la figure 4 est une vue en coupe partielle d'une autre variante de l'invention connu,
- la figure 5 est une coupe partielle d'un maître-cylindre connu.
- la figure 5A est une vue schématique montrant le fonctionnement du piston primaire connu lorsque le circuit de freinage fonctionne en mode ESP,
- la figure 6 est une vue en coupe axiale d'un piston primaire connu.

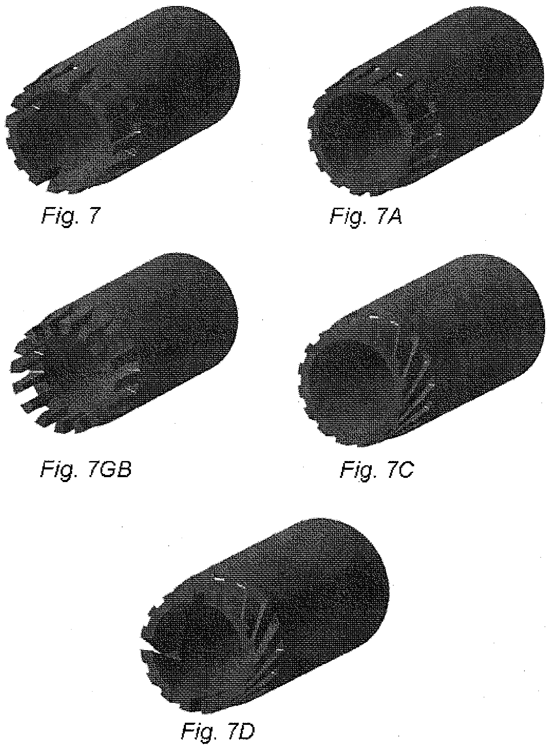

- Les figures 7, 7A, 7B, 7C, 7D sont des vue isométrique d'exemples de réalisation d'un piston.

### Description d'un mode de réalisation de l'invention

La figure 1 montre un maître-cylindre tandem 100 d'un système de freins selon connu de l'état de la technique.

Le maître-cylindre sera décrit ci-après par sa partie concernant le piston primaire, sachant que cette description s'applique pratiquement au piston secondaire et l'environnement dans le maître-cylindre tandem pour tous les éléments de dédoublement, permettant la commande de deux circuits de freins indépendants.

Le maître-cylindre se compose d'un corps 110 traversé par un alésage 120 d'axe (xx) recevant un piston primaire 130 commandé soit par un servofrein non représenté ou directement par l'action exercée par la pédale de frein sur le piston. Le sens de déplacement du piston primaire 130 est indiqué par la flèche AF qui correspond à une action de freinage allant, selon la figure 1, de la droite vers la gauche.

Le dessus du maître-cylindre est muni de deux entrées 101, 201 pour les embouts de sortie du réservoir de liquide de frein 190 simplement esquissé.

Le piston primaire 130 délimite dans l'alésage 120 une chambre de pression 140 reliée au circuit de freins C1 par un perçage 141. La chambre de pression 140 est séparée par le piston primaire 130 creux, d'une chambre d'alimentation 150 réalisée par une gorge périphérique dans le corps 110 du maître-cylindre 100. Du côté avant et du côté arrière, la chambre d'alimentation 150 est bordée d'une gorge périphérique 151, 152 débouchant dans l'alésage 120. La gorge avant 151 reçoit un joint périphérique de réalimentation 153 et la gorge arrière 152 un joint périphérique d'étanchéité 180 encore appelé joint d'isolation.

Le joint de réalimentation 153 permet l'alimentation en liquide de frein de la chambre de pression 140 en cas de manque de liquide de frein ou d'un actionnement brusque des freins. Le mouvement d'ouverture et de fermeture du joint de réalimentation 153 est décrit dans le document FR 2 916 405. Le joint d'étanchéité 180 sépare la chambre d'alimentation 150 de l'extérieur du maître-cylindre 100.

Les deux pistons 130, 230 sont reliés par une tige télescopique 170 formée de deux parties 171, 172 maintenues écartées par un ressort 173 et s'appliquant par les deux extrémités, l'une contre le fond 131 du piston 130 et l'autre contre le fond 231 du piston 230.

La description donnée ci-dessus de la partie primaire du maître-cylindre tandem 100 s'applique aussi à la partie secondaire comportant un piston secondaire 230 et le dédoublement des moyens de mise en pression des deux circuits de freins C1, C2. La description ci-dessus s'applique dans les mêmes conditions aux éléments de la partie secondaire qui portent les mêmes références augmentées de 100.

Aux figures 1 et 2, le piston primaire 130 de maître-cylindre tandem est réalisé en une seule pièce en matière plastique et se compose d'une jupe 132 munie d'un fond 131 en position intermédiaire entre ses deux extrémités ouvertes. Le fond 131 a une face arrière 131a, de forme tronconique recevant le poussoir du servofrein non représenté, et une face avant 131 b avec un bossage central 135 pour recevoir la tige télescopique 170 et le ressort de compression 173 associant le piston primaire 130 au piston secondaire 230.

La surface extérieure côté avant (côté tourné vers le piston secondaire) de la jupe 132, comporte un ensemble de nervures 138 délimitant des rainures 137, dont l'avant 137a est ouvert et l'arrière 137b est fermé. Ces rainures 137 débouchent dans la surface enveloppe de la jupe 132. L'épaisseur de la jupe 132a sous les rainures 137 et dans l'intervalle des rainures, forme une surface avant 132S importante, permettant au piston primaire 130 de pousser directement le piston secondaire 230 en cas de défaillance de la liaison normale entre le piston primaire 130 et le piston secondaire 230.

La vue isométrique du piston primaire 130 selon la figure 2A, montre la disposition des rainures 137 à l'avant de la jupe 132 du piston primaire 130. Dans ce mode de réalisation, les rainures sont parallèles à l'axe xx du piston 130 et leur longueur est telle qu'en position de repos du piston 130, le bord arrière 137b se trouve entre la chambre d'alimentation 150 et la gorge 151 du joint de réalimentation 153.

Bien que les rainures 137 soient de préférence parallèles à l'axe xx du piston primaire 130, une forme hélicoïdale des rainures 137 peut également être envisagée.

L'extrémité arrière fermée 137b des rainures 137 est droite, transversale, c'est-à-dire constituée par une surface plane transversale, notamment perpendiculaire à l'axe (xx). Cela permet d'éviter la forme tronconique nécessaire à la jupe du piston primaire 330 connu, au niveau de ses trous 333 (figure 5A).

La figure 3 est une coupe axiale de la variante de réalisation inventive du piston 130A dont l'avant de la jupe 132A comporte des rainures 137A délimitées entre des nervures 138A ayant une extrémité avant 138-1A inscrite dans un cylindre et se poursuivant vers l'arrière par une transition conique 138-2A pour rejoindre une partie cylindrique 138-3A, c'est-à-dire s'inscrivant respectivement dans une enveloppe tronconique et une enveloppe cylindrique.

La figure 4 montre une coupe partielle d'une autre variante connue 130B de l'extrémité de la jupe 132B dont les nervures 138B délimitent les rainures 137B se terminant par une partie avant conique 138-1B. Les autres parties des rainures 137A, 137B sont identiques à celles de la rainure 137.

Le moulage du piston primaire 130 en matière plastique ne présente pas de difficultés particulières. La forme cylindrique symétrique en rotation permet de réaliser le piston 130 dans un moule simple sans pièce mobile puisque la cavité avant de la jupe délimitant la chambre de pression, la cavité arrière de la jupe, chaque fois de part et d'autre du fond 131 ainsi que la jupe 132 et les rainures 137 de la jupe, ont des formes qui se démoulent facilement dans la direction de l'axe xx.

Dans le cas de rainures 137 parallèles à l'axe xx, avec une forme hélicoïdale, le démoulage nécessite un mouvement de rotation du piston primaire par rapport au moule d'injection ou à une partie de celui-ci.

Le piston primaire est réalisé de préférence en une seule pièce en matière plastique. Des exemples préférentiels de matières plastiques pour la réalisation du piston primaire 330, sont les matières plastiques thermodurcissables.

## Revendications

1. Piston primaire de maître-cylindre tandem, composé d'une jupe munie d'un fond en position intermédiaire entre les extrémités de la jupe, une face du fond servant d'appui au poussoir du servofrein et l'autre recevant la tige télescopique et le ressort de compression agissant sur le piston secondaire,
- la jupe ayant une extrémité avant munie de passages coopérant avec la chambre d'alimentation pour la relier à la chambre de pression délimitée dans le corps du maître-cylindre par la partie avant du piston primaire, et
- coopérant avec le joint de réalimentation logé dans une gorge du corps du maître-cylindre pour permettre le passage du liquide hydraulique en mode ESP,
- la jupe (132) et le fond (131) en position intermédiaire sont réalisés en matière plastique,
piston primaire (130) **caractérisé en ce qu'**
l'extrémité avant de la jupe comporte une couronne de nervures (138) délimitant des rainures (137) fermées à l'arrière par une extrémité arrière (137b) non ouverte, droite, transversale et débouchant vers l'avant pour assurer le passage entre la chambre d'alimentation (150) et la chambre de pression (140) lorsque le piston primaire (130) est en position d'alimentation et permettre le passage de liquide hydraulique sous le joint de réalimentation (153) lorsque le piston (130) est en position de repos et que le système de freinage fonctionne en mode ESP,
les nervures (138A) se terminant à l'avant par une extrémité avant (138-1A) cylindrique se poursuivant par une transition conique (138-2A) pour rejoindre une partie cylindrique (138-3A).

2. Piston primaire de maître-cylindre tandem selon la revendication 1,
**caractérisé en ce que**
l'extrémité arrière (137b) est plane et notamment perpendiculaire à l'axe (xx) du piston primaire.

3. Piston primaire de maître-cylindre tandem selon la revendication 1,
**caractérisé en ce que**
les rainures ont une forme hélicoïdale.

4. Piston primaire de maître-cylindre tandem selon la revendication 1,
**caractérisé en ce qu'**
il est réalisé en une seule pièce en matière plastique.

5. Maître-cylindre tandem,
**caractérisé en ce qu'**
il comporte un piston primaire (130) en matière plastique ayant une jupe (132) dont l'extrémité avant comporte une couronne de nervures 138 délimitant des rainures longitudinales (137, 137A, 137B), ouvertes vers l'avant selon l'une des revendications 1 à 4.

## Patentansprüche

1. Primärkolben eines Tandemhauptzylinders, der aus einem Mantel besteht, der mit einem Boden in Zwischenposition zwischen den Enden des Mantels ausgestattet ist, wobei eine Seite des Bodens dem Stößel des Bremskraftverstärkers als Anschlag dient und wobei die andere die Teleskopstange aufnimmt und wobei die Druckfeder auf den Sekundärkolben einwirkt,
- wobei der Mantel ein vorderes Ende aufweist, das mit Durchgängen ausgestattet ist, die mit der Zuführkammer zusammenwirken, um sie mit der Druckkammer zu verbinden, die in dem Körper des Hauptzylinders durch das Vorderteil des Primärkolbens begrenzt ist, und
- mit der Nachfülldichtung zusammenwirkt, die in einer Kehle des Körpers des Hauptzylinders angeordnet ist, um den Durchgang von Hydraulikflüssigkeit im ESP-Modus zu ermöglichen,
- der Mantel (132) und der Boden (131) in Zwischenposition sind aus Kunststoff hergestellt,
wobei der Primärkolben (130) **dadurch gekennzeichnet ist, dass** das vordere Ende des Mantels einen Kranz von Rippen (138) aufweist, die Rillen (137) begrenzen, die hinten durch ein nicht geöffnetes hinteres Ende (137b) geschlossen sind, das gerade, querverlaufend und nach vorne mündend ist, um den Durchgang zwischen der Zuführkammer (150) und der Druckkammer (140) zu gewährleisten, wenn der Primärkolben (130) in Zuführposition ist, und den Durchgang der Hydraulikflüssigkeit unter der Nachfülldichtung (153) zu ermöglichen, wenn der Kolben (130) in Ruheposition ist, und dass das Bremssystem im ESP-Modus funktioniert,
wobei die Rippen (138A) vorne durch ein zylindrisches vorderes Ende (138-1A) enden, das sich in einem konischen Übergang (138-2A) fortsetzt, um einen zylindrischen Teil (138-3A) zu erreichen.

2. Primärkolben eines Tandemhauptzylinders nach Anspruch 1, **dadurch gekennzeichnet, dass** das hintere Ende (137b) eben und insbesondere senkrecht zu der Achse (xx) des Primärkolbens ist.

3. Primärkolben eines Tandemhauptzylinders nach Anspruch 1, **dadurch gekennzeichnet, dass** die Rillen eine spiralförmige Form aufweisen.

4. Primärkolben eines Tandemhauptzylinders nach Anspruch 1, **dadurch gekennzeichnet, dass** er aus einem einzigen Stück aus Kunststoff hergestellt ist.

5. Tandemhauptzylinder, **dadurch gekennzeichnet, dass** er einen Primärkolben (130) aus Kunststoff, der einen Mantel (132) aufweist, dessen vorderes Ende einen Kranz von Rippen 138 aufweist, die Längsrillen (137, 137A, 137B) begrenzen, die vorne offen sind, nach einem der Ansprüche 1 bis 4 aufweist.

## Claims

1. Primary piston for a tandem master cylinder, composed of a skirt provided with a wall in the intermediate position between the ends of the skirt, one face of the wall serving as a support for the push rod of the servo brake and the other receiving the telescopic rod and the compression spring acting on the secondary piston,
- the skirt having a front end provided with passages cooperating with the supply chamber to connect it to the pressure chamber delimited in the body of the master cylinder by the front part of the primary piston, and
- cooperating with the resupply seal housed in a groove in the body of the master cylinder to allow the passage of the hydraulic liquid in ESP mode,
- the skirt (132) and the wall (131) in the intermediate position are made of plastic, which primary piston (130) is **characterized in that**
the front end of the skirt comprises a ring of ribs (138) delimiting slots (137) closed at the rear by a transverse, straight, non-open rear end (137b) which opens towards the front to ensure the passage between the supply chamber (150) and the pressure chamber (140) when the primary piston (130) is in the supply position and to allow the passage of hydraulic liquid below the resupply seal (153) when the piston (130) is in the rest position and when the brake system operates in ESP mode,
the ribs (138A) terminating at the front by a cylindrical front end (138-1A) which is continued by a conical transition (138-2A) to join up with a cylindrical part (138-3A).

2. Primary piston for a tandem master cylinder according to Claim 1,
**characterized in that**
the rear end (137b) is planar and in particular perpendicular to the axis (xx) of the primary piston.

3. Primary piston for a tandem master cylinder according to Claim 1,
**characterized in that**
the slots have a helical shape.

4. Primary piston for a tandem master cylinder according to Claim 1,
**characterized in that**
it is made in one piece from plastic.

5. Tandem master cylinder,
**characterized in that**
it comprises a plastic primary piston (130) having a skirt (132) of which the front end comprises a ring of ribs (138) delimiting longitudinal slots (137, 137A, 137B) open towards the front according to one of Claims 1 to 4.
